# EUROPÄISCHE PATENTANMELDUNG

(11) **EP 1 260 469 A1**
(43) Veröffentlichungstag der Anmeldung: **27.11.2002**
(21) Anmeldenummer: 02010976.5
(22) Anmeldetag: 17.05.2002
(51) Int. Cl.: B65G 47/90, B65G 47/91, B65B 21/18

(54) **Umsetzer für Flaschenbehandlungsanlagen**

(30) Priorität: 18.05.2001 DE 20108401 U
(71) Anmelder: AUTEFA automation GmbH, 86316 Friedberg (DE)
(72) Erfinder: Hirschek, Herwig, 86399 Bobingen (DE)
(74) Vertreter: Ernicke, Klaus Stefan

(57) **Zusammenfassung**

Die Erfindung betrifft einen Umsetzer (1) für Flaschenbehandlungsanlagen. Der Umsetzer (1) ist mit einer Greifeinrichtung (7) für mehrere Flaschen (14) ausgerüstet und ist zwischen mindestens einem offenen Flaschenförderer (17) mit einem Antrieb (25) und ein oder mehreren Trays (10, 11) angeordnet. Der Umsetzer (1) besteht aus einem oder mehreren mehrachsigen Robotern (2), die zum Beund/oder Entladen der Flaschen (14) mit dem Flaschenförderer (17) synchron mit dem Flaschenvorschub mitbewegt werden können. Die Greifeinrichtung (7) besitzt mehrere in mindestens einer Reihe angeordneten Greifelemente (8), die vorzugsweise als Klemmbacken oder als Sauger ausgebildet sind. Am Ende des Flaschenförderers (17) ist eine Überlaufbox (20) angeordnet.

## Beschreibung

Die Erfindung betrifft einen Umsetzer für Flaschenbehandlungsanlagen mit den Merkmalen im Oberbegriff des Hauptanspruchs.

Ein solcher Umsetzer ist aus der WO 99/55603 und WO 01/19684 bekannt. Er besteht aus einem Manipulator, der mit einer Greifeinrichtung für ein oder mehrere Reihen von Flaschen ausgerüstet ist. Der Manipulator ist zwischen einer Staustrecke am Ende eines Flaschenförderers und ein oder mehreren Zwischenträgern oder Trays angeordnet und dient dazu, die an der Staustrecke bereit gestellten Flaschen reihenweise zu greifen und unter Bildung von Flaschenlagen auf die Trays umzusetzen. In einer Variante dient die Greifeinrichtung zugleich als Staustrecke, wobei die Flaschen in die bereit stehende Greifeinrichtung überschoben werden. Eingangsseitig ist der Flaschenförderer an einen Flaschenerzeuger, z. B. eine Blasmaschine für Kunststoffflaschen, insbesondere PET-Flaschen, angeschlossen. In einer Variante kann der Umsetzer auch mit umgekehrter Kinematik arbeiten und Flaschen von Trays auf einen Flaschenförderer unter Reihenbildung der Flaschen umsetzen, wobei der Flaschenförderer ausgangsseitig an eine Fülllinie angeschlossen ist. In der Praxis hat sich gezeigt, dass der vorbekannte Umsetzer nicht für alle Arten von Flaschenbehandlungsanlagen gleich gut geeignet ist. Insbesondere bei Flaschenerzeugern mit gesteigerter Leistung stößt er an seine Grenzen.

Aus der WO 94/15862 ist eine Palettiereinrichtung mit einem Greiferkopf bekannt, der an einem Stützarm sitzt und der fingerartige Greifelemente zum Erfassen offener Flaschenhälse aufweist. Mit diesem Greiferkopf kann eine ganze Flaschenlage palettiert und umgesetzt werden. Die Flaschenlage bzw. Palette ruht hierbei ortsfest an einem Palettierplatz.

Es ist daher Aufgabe der vorliegenden Erfindung, den Umsetzer zu verbessern.

Die Erfindung löst diese Aufgabe mit den Merkmalen im Hauptanspruch.
Der beanspruchte Umsetzer hat den Vorteil, dass er den Umsetzvorgang schneller durchführen kann und damit eine höhere Leistung hat. Er kann mit hochmodernen Blasmaschinen Schritt halten.

Zudem bietet er die Möglichkeit, alternativ oder zusätzlich auch als Stapeleinrichtung zum Auf- oder Abbauen von Traystapeln eingesetzt werden zu können. Hierbei kann der Umsetzer bzw. sein Manipulator multifunktionell sein und die entsprechenden Werkzeuge mit Hilfe einer Wechselkupplung nach Bedarf tauschen.

Die Leistungssteigerung des Umsatzes wird ohne Erhöhung des Bau- und Platzaufwandes erreicht. Sie ist dadurch besonders wirtschaftlich. Überdies können durch die Einsparung von Staustrecken, Rangeltischen und dergleichen Kosten und Platzbedarf sogar verringert werden.

Ein weiterer Vorteil besteht darin, dass der beanspruchte Umsetzer noch besser die bisher bei Flaschenbehandlungsanlagen häufig eingesetzten Luftförderer ersetzen und ohne deren Pufferfunktion auskommen kann. Zudem bietet der beanspruchte Umsetzer eine noch größere Gestaltungsfreiheit bei der Flaschenform, was insbesondere für die zunehmend eingesetzten PET-Flaschen und andere Kunststoffflaschen von Vorteil ist. Durch die bisher üblichen Luftförderer mussten diese Kunststoffflaschen am Hals einen seitlich überstehenden Kragen haben, an dem sie im Luftförderer geführt wurden. Hierauf kann mit dem beanspruchten Umsetzer verzichtet werden. Mit dem Umsetzer können auch alle sonstigen Arten von Flaschen, z.B. auch Glasflaschen, umgesetzt werden.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1 und 2:: einen Umsetzer mit Gelenkroboter und einem Flaschenförderer in unterschiedlichen Bauformen,
- Figur 3:: eine vergrößerte Darstellung des Umsetzers mit der Greifeinrichtung und einer Förderschnecke,
- Figur 4 und 5:: zwei abschnittsweise dargestellte Bauvarianten des Flaschenförderers,
- Figur 6:: eine Bauvariante des Umsetzers mit einem Portalgreifer,
- Figur 7:: eine konventionelle PET-Flasche in Seitenansicht,
- Figur 8:: eine weiterentwickelte Ausführungsform der Flasche von Figur 7,
- Figur 9:: eine Draufsicht auf einen Umsetzer mit einer Fülllinie, welcher zugleich eine Stapeleinrichtung darstellt und
- Figur 10 und 11:: zwei schematische Draufsichten auf Bauvarianten einer Flaschenbehandlungsanlage.

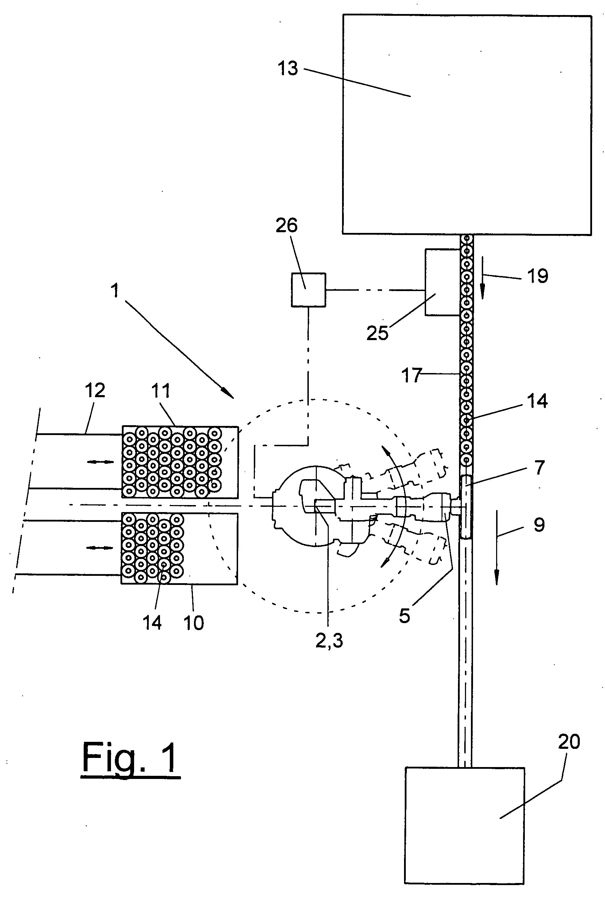

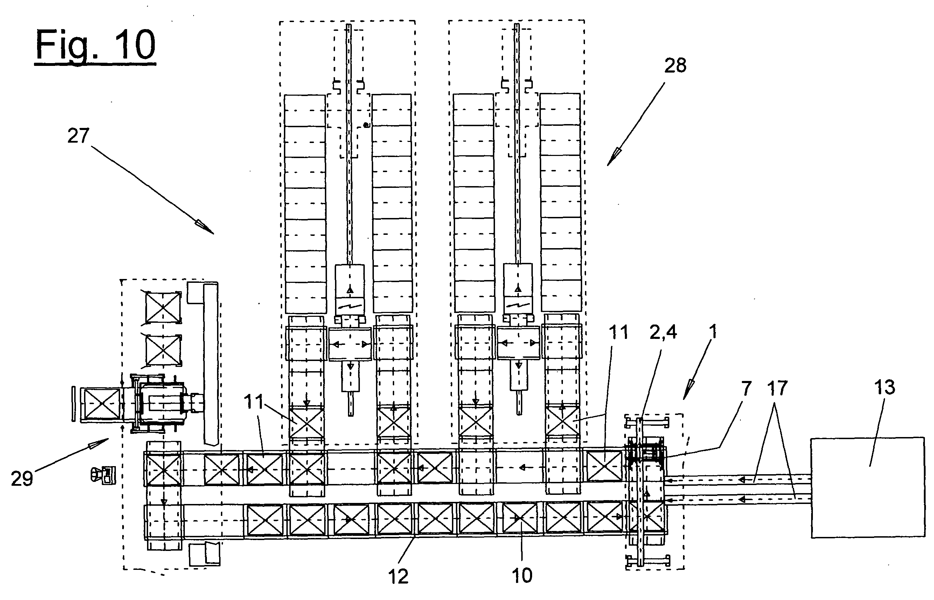

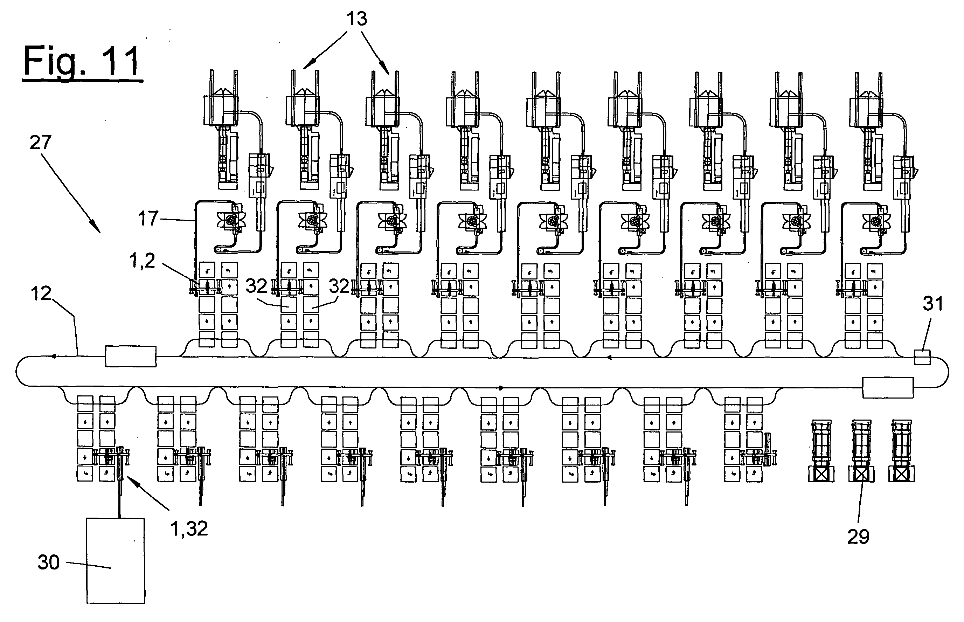

Figur 1 zeigt in der Draufsicht einen Umsetzer (1), der hier als Flaschenumsetzer ausgebildet ist. Er dient zum Einsatz in Flaschenbehandlungsanlagen (27), wie sie in den nachfolgend näher erläuterten Figuren 10 und 11 dargestellt sind.

Der Umsetzer (1) besitzt mindestens einen mehrachsigen Manipulator (2), der hier als mehrachsiger Gelenkroboter (3) ausgebildet ist und z.B. sechs rotatorische Achsen hat. Der Umsetzer (1) ist zwischen mindestens einem offenen Flaschenförderer (17) und ein oder mehreren benachbarten Trays (10,11) angeordnet. Die zumindest einseitig offene Bauweise des offenen Flaschenförderers (17) erlaubt ein Entnehmen oder auch ein Zuführen von Flaschen (14) direkt vom oder zum Flaschenförderer (17). Der Umsetzer (1) ist mit einer Greifeinrichtung (7) ausgerüstet, mit der er die auf dem Flaschenförder (17) in ein oder mehreren Reihen zugeführten Flaschen (14) greift und auf die bereit stehenden Trays (10,11) umsetzt, wobei dort mehrreihige sogenannte Flaschenlagen gebildet werden.

Der Flaschenförderer (17) kann unterschiedlich ausgestaltet sein. Er bewegt die Flaschen (14) in Förderrichtung (19) in ein oder mehreren vorzugsweise parallelen Strängen und ist mit einem Antrieb (25) ausgerüstet. In der Ausführungsform von Figur 1 ist der Flaschenförderer (17) eingangsseitig an einen Flaschenerzeuger (13) angeschlossen. Hierbei kann es sich um eine Blaseinrichtung für Kunststoffflaschen, insbesondere für PET-Flaschen handeln. Alternativ kann der Flaschenerzeuger (13) auch eine Auspackeinrichtung zur Bereitstellung von Neu- oder Recycling-Glasflaschen oder dergleichen sein.

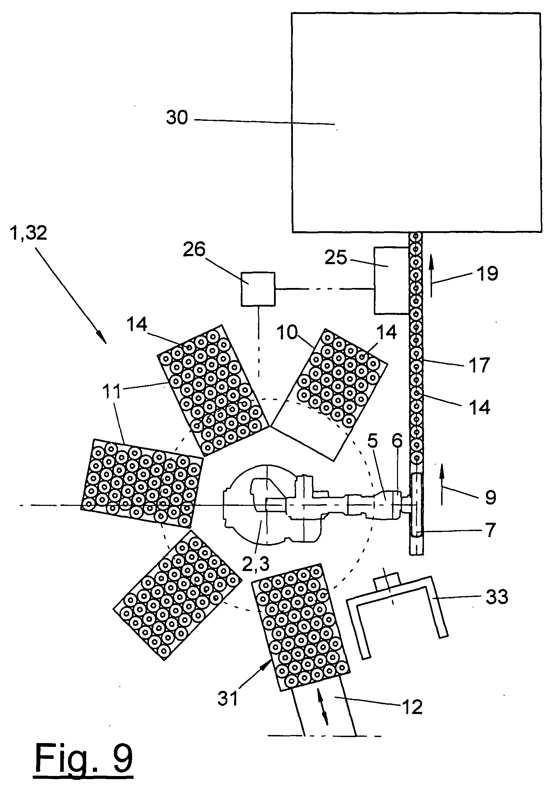

Die Flaschen (14) können aus einem beliebig geeigneten Material bestehen und auch eine beliebige Flaschenform haben. Figur 7 und 8 zeigen hierfür zwei Ausführungsbeispiele. In Figur 7 ist die bisher wegen der verwendeten Liftförderer übliche und erforderliche Flaschenform dargestellt. Die Flasche (14) hat hierbei einen kurzen Flaschenhals (15), der im oberen Bereich einen ringförmigen seitlich vorstehenden Kragen (16) aufweist. Dieser Kragen (16) war bisher zur Führung der Flasche (14) in einem Luftförderer erforderlich. Der Luftförderer machte auch die im Wesentlichen zylinderförmige Flaschenform nötig. Solche Flaschen können mit dem gezeigten Umsetzer (1) ebenfalls problemlos umgesetzt werden. Darüber hinaus kann der Umsetzer (1) aber auch beliebige andere Flaschenformen, z.B. die in Figur 8 gezeigte schlanke und einer Weinflasche ähnelnde Flaschenform umsetzen. Sie hat einen langgestreckten und allmählich sich erweiternden Flaschenhals (15). Statt dessen können die Flaschen (14) aber auch eine beliebige andere, z.B. besonders kurze und bauchige Flaschenform, ähnlich einer Kalebasse haben.

Für PET-Flaschen oder andere leichte und standlabile Flaschen (14) ist ein Flaschenförderer (17) von Vorteil, der eine möglichst dreiseitige sichere Flaschenführung, z.B. am Boden stehend, in Förderrichtung (19) und an beiden Seiten bietet.

Figur 9 zeigt eine Funktionsumkehr, wobei der Flaschenförderer (17) in umgekehrter Richtung funktioniert und ausgangsseitig an eine Fülllinie (30) angeschlossen ist. Alternativ kann statt der Fülllinie (30) auch eine Wascheinrichtung, eine Etikettierstation oder ein sonstiger beliebiger, die Flaschen (14) aufnehmender Bestandteil einer Flaschenbehandlungsanlage (27) vorhanden sein. Der Umsetzer (1) funktioniert hierbei ebenfalls umgekehrt, wobei er bereit gestellte gefüllte Trays (10,11) entleert und die Flaschen (14) auf den Flaschenförderer (17) umsetzt, wobei hier ein oder mehrere Flaschenreihen gebildet werden.

Zur Beschleunigung der Umsetzvorgänge bewegt sich in beiden Fällen der Manipulator (2) mit seiner Greifeinrichtung (7) während des Aufnehmens oder Abgebens der Flaschen (14) mit seiner Bewegungsrichtung (9) parallel zur Förderrichtung (19) des Flaschenförderers (17). Während dieser Mitführbewegung werden die Flaschen (14) vom Flaschenförderer (17) ergriffen und entnommen oder umgekehrt dem Flaschenförderer (17) zugeführt und losgelassen. Damit die Flaschen (14) positionsgenau vom Flaschenförderer (17) entnommen oder zugeführt werden können, sind die Bewegungen von Manipulator (2) und Flaschenförderer (17) synchronisierbar. Hierbei ist auch der Flaschenförderer (17) vorzugsweise entsprechend ausgebildet, um die Flaschen (14) für die Übergabe bzw. Übernahme exakt positionieren zu können. Die Synchronisation betrifft sowohl die Geschwindigkeitsanpassung, wie auch die Positionierung.

Die Synchronisierung kann zum einen über den erwähnten positionsgenau fördernden Flaschenförderer (17) und eine Synchronisiereinrichtung (26) erfolgen, an die sowohl der Antrieb (25) des Flaschenförderers (17), wie auch der Manipulator (2) angeschlossen ist. Die Synchronisiereinrichtung (26) kann ein separates Bauteil in der Art einer Steuerung sein, welches sich auch nachrüsten lässt. Alternativ kann die Synchronisiereinrichtung (26) auch in den Umsetzer (1) an geeigneter Stelle, z.B. im Manipulator (2) und dessen Steuerung oder im Antrieb (25) integriert sein.

Alternativ kann die Synchronisierung zwischen dem Flaschenvorschub auf dem Flaschenförderer (17) und der mitbewegten Greifeinrichtung (7) auch über eine geeignete stationäre oder vom Manipulator (2) mitbewegte Sensorik erfolgen. Diese kann z.B. als Kamerasystem, Lichtschrankenanordnung oder anderer berührungsloser Taster, taktiler Sensor oder dergleichen ausgebildet sein.

In diesem Fall muss der Flaschenförderer (17) nicht unbedingt positionsgenau fördern. Auf die positionsgenaue Förderung kann auch bei Verwendung von Glasflaschen oder anderen relativ standfesten und unempfindlichen Flaschen verzichtet werden.

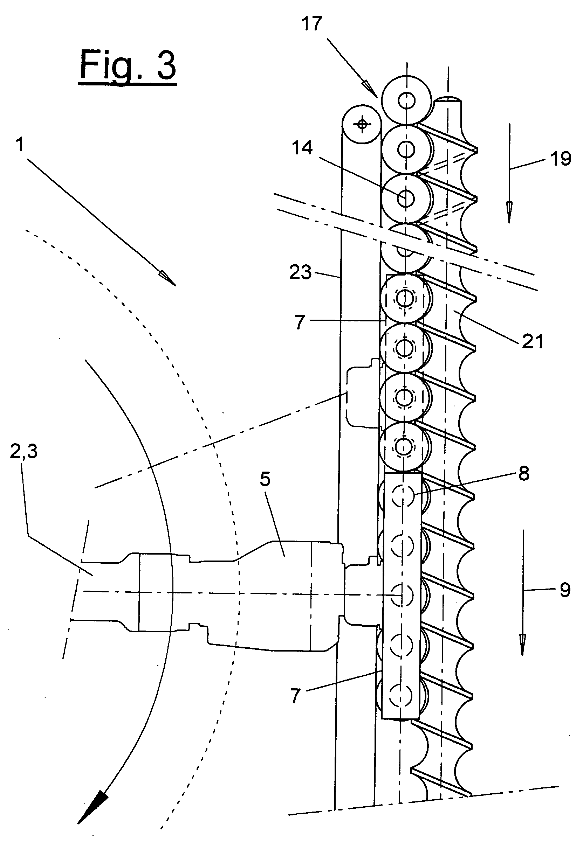

Figur 3 zeigt den Übernahmevorgang gemäß Figur 1 in einer vergrößerten und stärker detaillierten abgebrochenen Draufsicht. Der Flaschenförderer (17) ist hierbei als Positionierförderer ausgebildet und besteht aus einer stationär angeordneten und sich drehenden Förderschnecke (21) und einem zweiten geeigneten Fördermittel (23), welches hier als geschwindigkeitssynchron mitbewegtes Gegenband (23) ausgebildet ist. Die Flaschen (14) werden hierbei an drei Seiten, d.h. am Boden und beidseitig im unteren Bereich von diesen Fördermitteln (21,23) formschlüssig sicher geführt und zugleich auch exakt positioniert. Die Flaschen (17) können hierbei auf einem stationären Boden entlanggleiten, wobei der Boden alternativ ebenfalls von einem umlaufenden Förderband gebildet werden kann.

Durch die Förderschnecke (21) werden die Flaschen (17) nicht nur mit einer über die Schneckendrehung exakt steuerbaren Geschwindigkeit in Förderrichtung (19) transportiert. Durch Definition einer Nullpunktlage und eines entsprechenden Winkelgebers an der Förderschnecke (21) kann darüber hinaus auch die exakte Axialposition der einzelnen Flaschen (14) in Förderrichtung (19) bestimmt werden. Bei der hier gezeigten Ausführungsform stoßen die Flaschen (14) in Förderrichtung (19) aneinander.

Die in Figur 3 dargestellte Greifeinrichtung (7) besteht aus einem Längsbalken mit ein oder mehreren geeigneten Greifelementen (8), mit deren Hilfe die im oberen Bereich offen zugänglichen Flaschen (14) an geeigneter Stelle in der gewünschten Position sicher gegriffen und gehalten werden können. In der gezeigten Ausführungsform bestehen die Greifelemente aus beispielsweise fünf in Reihe hintereinander angeordneten Saugeinrichtungen, die positionsgenau über die Flaschenhälse (15) gestülpt werden. Alternativ können die Greifelemente (8) auch aus zwei längs gerichteten Klemmbacken bestehen, die fünf Flaschen gleichzeitig von der Seite her greifen. Darüber hinaus ist die konstruktive Gestaltung der Greifelemente (8) auch in anderer beliebiger Weise variierbar. Variabel ist zudem die Zahl der gleichzeitig gegriffenen Flaschen (14). Sie kann kleiner oder größer als in der gezeigten Ausführungsform sein.

Figur 3 verdeutlicht auch den Entnahmevorgang und die Mitbewegung der Greifeinrichtung (7). Zunächst wird die Greifeinrichtung (7) durch eine entsprechende Roboterbewegung über dem Anfang der Flaschenreihe und der Zahl der zu ergreifenden Flaschen exakt positioniert. Figur 3 zeigt dies im oberen Bildbereich durch die gestrichelte Darstellung. Sobald die exakte Position der Greifeinrichtung (7) und ihrer Greifelemente (8) gegenüber den zu ergreifenden Flaschen (14) gefunden bzw. eingestellt ist, wird die Greifeinrichtung (7) durch entsprechende Roboterbewegung synchron in Position und Geschwindigkeit mit den Flaschen (14) mitbewegt. Während dieser Mitbewegung (9) wird die zunächst mit Abstand oberhalb der Flaschen (14) positionierte Greifeinrichtung (7) abgesenkt und erfasst mit ihren Greifelementen (8) die Flaschen (14). Anschließend wird unter weiter dauernder synchronisierter Mitbewegung die Greifeinrichtung (7) angehoben, wobei sie die ergriffenen Flaschen (14) nach oben zieht und vom Flaschenförderer (17) abhebt. Sobald die ergriffenen Flaschen (14) frei sind, bewegt sich der Manipulator (2) mit erhöhter Geschwindigkeit zu den an geeigneter Stelle in seinem Arbeitsraum bereit gestellten Trays (10,11) und stellt dort in einer Absetzbewegung die gegriffenen Flaschen (14) ab. Anschließend kehrt der Manipulator (2) wieder zum Flaschenförderer (17) zurück und beginnt den vorbeschriebenen Aufnahmevorgang von neuem. Innerhalb der für den Umsetzvorgang benötigten Zeit ist die nächste umzusetzende Flaschencharge vom Flaschenförderer (17) in die Übernahmeposition vorbewegt worden. Die Fördergeschwindigkeit des Flaschenförderers (17) bildet die sogenannte Masterachse, an der sich die Umsetzkinematik orientiert.

Für die hohen Umsetzgeschwindigkeiten und die kurzen Taktzeiten empfiehlt es sich, mit zwei oder mehr bereit gestellten Trays (10,11) zu arbeiten, die jeweils von einem gemeinsamen oder eigenen Trayförderer (12) in Arbeitsposition gebracht werden. Bei Anordnung von zwei oder mehr Trays (10,11) gehen die Wechselzeiten beim Austausch der gefüllten gegen leere Trays (10,11) nicht in die Umsetz-Taktzeit ein.

Für eine weitere Kapazitätssteigerung ist es auch möglich, in Abwandlung zu Figur 1 mehrere, z.B. zwei Manipulatoren (2) beidseits des Flaschenförderers (17) anzuordnen. Hierdurch kann die Fördergeschwindigkeit und Förderkapazität erhöht werden.

Für evtl. auftretende Störungsfälle kann am Ende des Flaschenförderers (17) eine Überlaufbox (20) oder ein anderer geeigneter Speicher vorhanden sein, der die nicht umgesetzten Flaschen (14) aufnimmt.

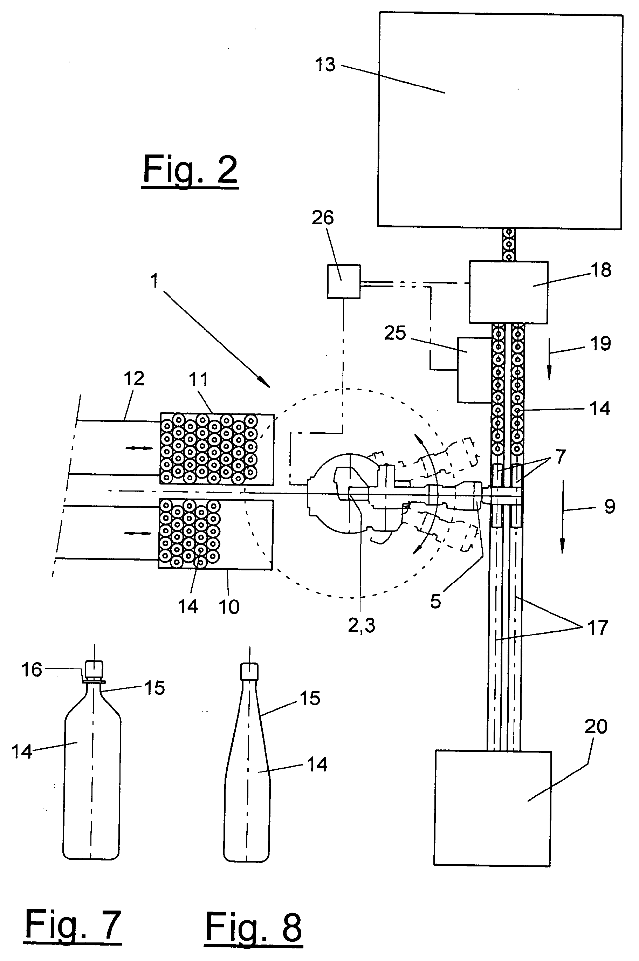

Figur 2 zeigt eine Variante zu Figur 1, wobei der Flaschenförderer (17) zwei parallele Förderstränge hat. Dementsprechend besitzt die Greifeinrichtung (7) die doppelte Zahl von Greifelementen (8) und kann somit von beiden Fördersträngen gleichzeitig Flaschen (14) greifen. Zur Bildung der mehrfachen Förderstränge ist ein Verteiler (18), z.B. ein Sternverteiler vorgesehen, welcher ebenfalls mit der Synchronisiereinrichtung (26) verbunden sein kann. Der Verteiler (18) ist an den aus der Blasmaschine (13) austretenden einzelnen Förderstrang angeschlossen und verteilt die zugeführten Flaschen (14) gleichmäßig auf die beiden auslaufseitigen Förderstränge. Hierbei können auch mehr als zwei parallele Förderstränge vorhanden sein. Die in Figur 3 gezeigte Förderschnecke (21) kann hierbei im Einlaufbereich eine veränderte Gestaltung mit insbesondere einer veränderlichen Steigung haben. Vom Verteiler (18) werden die Flaschen (14) zunächst auf Lücke gesetzt. Die Schnecke (21) hat hierzu entsprechend breite Stege zwischen den Schneckengängen, die sich anschließend in Förderrichtung (19) immer mehr verkleinern, bis die Flaschen (14) den Sollabstand haben oder ggf. auch aneinander stoßen.

Bei der in Figur 3 gezeigten Förderschnecke (21) sind die Schneckengänge in ihren Abmessungen exakt auf die zu fördernden Flaschen (14) abgestimmt, so dass die Flaschen (14) in definierter Lage und ohne wesentliches axiales Spiel in Förderrichtung (19) gehalten und positioniert sind.

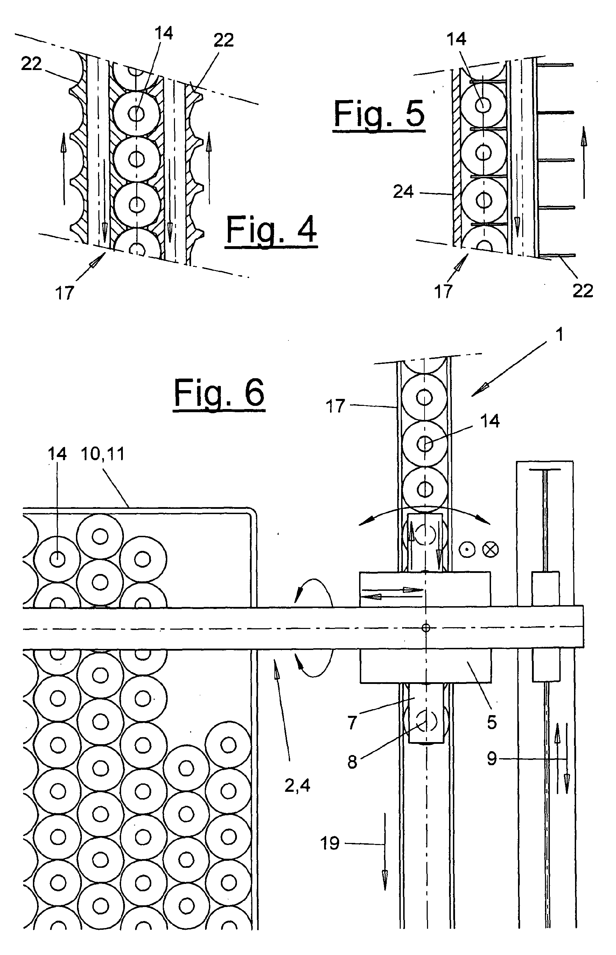

Figur 4 und 5 zeigen weitere Varianten des Flaschenförderers (17). In Figur 4 sind anstelle der Förderschnecke (21) zumindest an einer Seite, vorzugsweise auch an beiden Seiten Formbänder (22) angeordnet. Die Formbänder (22) haben die auf der linken Bildhälfte gezeigten runden Flaschenaufnahmen oder die in der rechten Bildhälfte dargestellten prismatischen Flaschenaufnahmen, die die Flaschen (14) zumindest an einem Teilumfang formschlüssig umgreifen und exakt führen. Die Aufnahmen sind als eine Art Formbacken ausgebildet und z.B. einteilig an den Grundwerkstoff des Bandes angeformt.

In der Variante von Figur 5 bildet das Formband (22) fachförmige Aufnahmen und hat hierzu quer abstehende Stege, welche zwischen die Flaschen (14) greifen und diese dabei etwas in Förderrichtung (19) distanzieren. Figur 5 zeigt hierbei auch die Variante eines nur auf einer Seite angeordneten Formbandes (22), wobei die Flaschen (14) auf der anderen Seite des Flaschenförderers (17) von einer stationären Gegenwand (24) geführt sind und an dieser entlanggleiten. Auch hier ist der Weitenabstand der Fördermittel (21,22,23) derart eingestellt, dass eine formschlüssige Führung nicht nur in Förderrichtung (19), sondern auch quer dazu besteht.

Figur 6 zeigt eine Variante des Manipulators (2), der hier als mehrachsiger Portalroboter (4) ausgebildet ist. Der Portalroboter (4) hat mehrere translatorische Achsen, wobei er eine Fahrachse in Bewegungsrichtung (9) besitzt, die sich längs der Förderrichtung (19) erstreckt. Die Greifeinrichtung (7) wird ebenfalls durch eine geeignete Roboterhand (5) gehalten und mit dieser entlang einer Traverse quer zur Förderrichtung (19) bewegt. Hierbei können außerdem zusätzliche Drehachsen vorhanden sein, mit denen die Greifeinrichtung (7) um ihre Hochachse oder auch um ihre Querachse längs der Traverse gedreht werden kann.

In beiden vorbeschriebenen Ausführungsformen des Gelenkroboters (3) und des Portalroboters (4) können die Flaschen (14) mit einer kombinierten Schwenk- und Kippbewegung auf die Trays (10,11) abgesetzt werden. Die Kinematik ist hierbei die gleiche wie in der WO 01/19684. Hierbei kann an den Trays (10,11) eine federnde Klemmeinrichtung vorhanden sein, die die Flaschenlage in definierter Anordnung zusammenschiebt. In diesem Fall ist der Trayboden glatt und erlaubt ein Verrutschen der Flaschen (14). Alternativ können die Trays (10,11) auch Formeinsätze zum formschlüssigen Positionieren der Flaschen (14) aufweisen. Zur Maximierung der Flaschenbeladung empfiehlt es sich, die Flaschen (14) in ihren Reihen gegenseitig auf Lücke zu setzen.

Figur 9 zeigt eine Variante des Umsetzers (1) mit einer Doppelfunktion als Flaschenumsetzer und als Stapeleinrichtung (32). Bei dieser Variante ist z.B. der Flaschenförderer (17) an eine Fülllinie (30) angeschlossen, wobei der Flaschenumsetzer (1) die auf beladenen Trays (10,11) bereit gestellten Flaschen (14) entnimmt, auf den Flaschenförderer (17) umsetzt und dort in ein oder mehreren Reihen anordnet. Die Trays (10,11) können dabei nach und nach entladen werden. Figur 9 zeigt hierzu beladene Trays (11) und einen teilentladenen Tray (10).

Bei der in Figur 9 dargestellten Bauvariante werden die beladenen Trays (10,11) in Form eines Traystapels (31) auf dem Trayförderer (12) zugeführt. Sie werden dann vom Umsetzer (1) mittels eines geeigneten Stapelwerkzeugs (33) zunächst entstapelt und in die dargestellten Entladepositionen gebracht. Nach dem Entladen können die leeren Trays (10) in umgekehrter Reihenfolge dann wieder zu einem Traystapel (31) aufgebaut und gegen einen neuen beladenen Traystapel (31) getauscht werden. Für einen schnellen Wechsel können zwei Trayförderer (12) vorhanden sein.

Bei der in Figur 9 gezeigten Ausführungsform empfiehlt es sich, die Manipulatorhand (5) mit einer Wechselkupplung (6) auszustatten, mit der die Greifeinrichtung (7) und das Stapelwerkzeug (33) gegeneinander ausgetauscht werden können. Die Werkzeuge haben hierzu die entsprechenden Kupplungsanschlüsse. Eine solche Ausgestaltung lässt sich nicht nur bei dem in Figur 9 gezeigten Gelenkroboter (3), sondern auch bei einem Portalroboter entsprechend Figur 6 durchführen.

Figur 10 zeigt eine Draufsicht auf eine Flaschenbehandlungsanlage (27), bei der der Umsetzer (1) an die Flaschenförderer (17) und an einen Flaschenerzeuger (13) angeschlossen ist. Die Trays (10,11) werden hier im Kreislauf über einen Trayförderer bewegt. An den Trayförderer (12) sind hierbei ein Zwischenlager (28) für die leeren und befüllten einzelnen Trays oder ggf. auch gestapelten Trays (10,11) angeordnet. Am Ende des Förderkreises befindet sich ein Palettierer (29), mit dem die Flaschenlagen von den Trays (10,11) entnommen und palettiert sowie ggf. auch verpackt werden.

Figur 11 zeigt eine weitere Variante einer Flaschenbehandlungsanlage (27), bei der der Trayförderer (12) sich in einen Hauptkreislauf und verschiedene über Weichen angeschlossene Nebenlinien unterteilt. Auf dem Hauptkreislauf werden die Trays in Traystapeln (31) transportiert. Über die Nebenlinien wird ein Anschluss an einen kleinen Traykreislauf geschaffen, indem die Traystapel (31) zunächst entstapelt, dann be- oder entladen und anschließend wieder aufgestapelt und zurück an die Hauptlinie transportiert werden. Die Flaschenbehandlungsanlage (27) hat mehrere Flaschenerzeuger (13), die parallel nebeneinander angeordnet sind und jeweils mit einem eigenen der vorbeschriebenen Flaschenförderer (17) und Umsetzer (1) ausgerüstet sind. Die Stapeleinrichtungen (32) können hierbei als selbstständige und vom Umsetzer (1) baulich getrennte Stapler und Entstapler ausgebildet sein. Der Umsetzer (1) hat bei dieser Variante z.B. nur eine Flaschenumsetzfunktion. Die Flaschenbehandlungsanlage (27) umfasst ferner noch mehrere Fülllinien (30), von denen nur eine der Übersicht halber dargestellt ist. Hier kommen z.B. Umsetzer (1) der vorbeschriebenen Art zum Einsatz, die zugleich eine Stapeleinrichtung (32) bilden. Alternativ können auch getrennte Stapler und Entstapler (32) vorhanden sein. Alternativ lassen sich auch an den Flaschenerzeugern (13) die genannten Kombiumsetzer verwenden. Die Flaschenbehandlungsanlage (27) kann in Figur 11 zudem noch ein oder mehrere Zwischenlager (nicht dargestellt) und ggf. auch Palettierer (29) oder andere Verpackungseinrichtungen aufweisen.

Abwandlungen der gezeigten Ausführungsformen sind in verschiedener Weise möglich. Zum einen können die dargestellten unterschiedlichen Gestaltungen der einzelnen Anlagenkomponenten, des Umsetzers (1), des Flaschenförderers (17) und weiterer Bestandteile beliebig untereinander vertauscht, kombiniert oder in sonstiger Weise verändert werden. Der in Figur 3 gezeigte Kombiumsetzer mit Flaschenumsetzer (1) und Stapeleinrichtung (32) kann auch in Verbindung mit einem Flaschenerzeuger (13) und entsprechend umgekehrter Förderrichtung (19) des Flaschenförderers (17) eingesetzt werden. Umgekehrt können die in Figur 1 bis 3 und 6 dargestellten Flaschenumsetzer (1) auch an eine Fülllinie (30) angeschlossen sein, wobei sich ebenfalls die Förderrichtung (19) der Flaschenförderer (17) umkehrt. Variabel ist ferner die konstruktive Ausgestaltung des Flaschenförderers (17), der z.B. auch als Hängeförderer mit einer elastischen und die Flaschen beim Umsetzenden frei gebenden Flaschenführung ausgestattet ist.

### BEZUGSZEICHENLISTE

- 1: Umsetzer, Flaschenumsetzer
- 2: Manipulator, Roboter
- 3: Gelenkroboter
- 4: Portalroboter
- 5: Manipulatorhand, Roboterhand
- 6: Wechselkupplung
- 7: Greifeinrichtung
- 8: Greifelement, Saugeinrichtung
- 9: Bewegungsrichtung Greifer
- 10: Zwischenträger, Tray
- 11: Zwischenträger, Tray
- 12: Trayförderer
- 13: Flaschenerzeuger, Blasmaschine, Entpacker
- 14: Flasche
- 15: Flaschenhals
- 16: Kragen
- 17: Flaschenförderer
- 18: Verteiler
- 19: Förderrichtung
- 20: Überlaufbox
- 21: Fördermittel, Förderschnecke
- 22: Fördermittel, Formband
- 23: Fördermittel, Gegenband
- 24: Gegenwand
- 25: Antrieb
- 26: Synchronisiereinrichtung
- 27: Flaschenbehandlungsanlage
- 28: Zwischenlager
- 29: Palettierer
- 30: Fülllinie
- 31: Traystapel
- 32: Stapeleinrichtung
- 33: Stapelwerkzeug

## Patentansprüche

1. Umsetzer für Flaschenbehandlungsanlagen, wobei der mit einer Greifeinrichtung (7) für mehrere Flaschen (14) ausgerüstete Umsetzer (1) zwischen mindestens einem angetriebenen (25) offenen Flaschenförderer (17) und ein oder mehreren Trays (10,11) angeordnet ist, **dadurch gekennzeichnet, dass** der Umsetzer (1) mindestens einen mehrachsigen und zum Be- und/oder Entladen mit dem Flaschenförderer (17) mitbewegbaren Manipulator (2) aufweist, der in seinen Bewegungen mit dem Flaschenvorschub synchronisierbar ist.

2. Umsetzer nach Anspruch 1, **dadurch gekennzeichnet, dass** der Manipulator (2) als Gelenkroboter (3) oder als Portalroboter (4) ausgebildet ist.

3. Umsetzer nach Anspruch 1 oder 2, **dadurch gekennzeichnet, dass** der Manipulator (2) und der Flaschenförderer (17) durch eine Synchronisiereinrichtung (26) verbunden sind.

4. Umsetzer nach Anspruch 1, 2 oder 3, **dadurch gekennzeichnet, dass** die Greifeinrichtung (7) mehrere in mindestens einer Reihe angeordnete Greifelemente (8) aufweist.

5. Umsetzer nach einem der vorhergehenden Ansprüche, **dadurch gekennzeichnet, dass** die Greifelemente (8) als Klemmbacken oder als Sauger ausgebildet sind.

6. Umsetzer nach einem der vorhergehenden Ansprüche, **dadurch gekennzeichnet, dass** die Greifelemente (8) in Längsrichtung relativ zueinander beweglich sind.

7. Umsetzer nach einem der vorhergehenden Ansprüche, **dadurch gekennzeichnet, dass** dam Ende des Flaschenförderers (17) eine Überlaufbox (20) angeordnet ist.

8. Umsetzer nach einem der vorhergehenden Ansprüche, **dadurch gekennzeichnet, dass** der Flaschenförderer (17) eingangsseitig an einen Flaschenerzeuger (13) angeschlossen ist.

9. Umsetzer nach einem der vorhergehenden Ansprüche 1 bis 7, **dadurch gekennzeichnet, dass** der Flaschenförderer (17) ausgangsseitig an eine Fülllinie (30) angeschlossen ist.

10. Umsetzer nach einem der vorhergehenden Ansprüche, **dadurch gekennzeichnet, dass** der Manipulator (2) an der Manipulatorhand (5) eine Wechselkupplung (6) aufweist, wobei die Greifeinrichtung (7) als Wechselgreifer ausgebildet ist.

11. Umsetzer nach einem der vorhergehenden Ansprüche, **dadurch gekennzeichnet, dass** der Umsetzer (1) als Stapeleinrichtung (32) zum Auf- und Abbauen von Traystapeln (31) ausgebildet ist.

12. Umsetzer nach einem der vorhergehenden Ansprüche, **dadurch gekennzeichnet, dass** der Umsetzer (1) ein wechselbares Stapelwerkzeug (33) aufweist.
